# EUROPEAN PATENT APPLICATION

(11) **EP 4 241 929 A1**
(43) Date of publication of application: **13.09.2023**
(21) Application number: 22160403.6
(22) Date of filing: 07.03.2022
(51) Int. Cl.: B25J 9/16, G06V 10/70, B65G 61/00

(54) **METHOD FOR OPERATING A PALLETIZER**

(71) Applicant: Körber Suppy Chain DK A/S, 9510 Arden (DK)
(72) Inventor: KRISTENSEN, Jan, 9210 Aalborg SØ (DK)
(74) Representative: Chas. Hude A/S

(57) **Abstract**

The present invention relates to a computer-implemented method of for operating a palletizer (100), comprising: receiving image data, using at least one camera (101), of at least one item (200) intended to be handled by the palletizer (100) in a handling process; analyzing, using a machine-learning model, the received image data; determining, using the machine-learning model, that an obstacle (205) may cause a malfunction of the handling process; and generating a control signal for instructing the palletizer (100) to stop the handling process.

## Description

### TECHNICAL FIELD

The present invention generally concerns the field of industrial automation, and in particular the controlling of a palletizer, e.g. a layer picker, based on machine-learning.

### BACKGROUND

Palletizers are used worldwide in the handling of items. They enable efficient movement of items, even heavy items in large quantities, for example arranged in layers on pallets, which human users would not be able to move or could only move with great effort. One example of such palletizer is the layer picker, which is a world's leading machine used for moving, i.e. picking, 97 % of all goods that are arranged in layers, for example on pallets. Therefore, the layer picker is the predominant machine in industrial automation for palletizing and depalletizing goods which are arranged in layers. Layer pickers can be implemented in a variety of configurations and are commonly used for example in combination with robots, portal cranes or hoists. Technological background information about exemplary layer pickers may be found in WO 00/64790 A1, WO 2008/019691 A1 and WO 2010/097088 A1.

Despite the already widespread use of palletizers, in particular layer pickers, and the high level of technological development, inefficiencies can occur during a handling process. Such inefficiencies may for example result from inadequately tight pickup of the items.

It is therefore a problem underlying the invention to increase the efficiency during handling processes of palletizers and thereby overcome the above-mentioned disadvantages of existing palletizers, in particular layer pickers, at least in part.

### SUMMARY

The problem is solved by the subject-matter defined in the independent claims. Advantageous modifications of embodiments of the invention are defined in the dependent claims as well as in the description and the figures.

According to a fist aspect of the present invention, a computer-implemented method of for operating a palletizer is provided. The method may comprise receiving image data, using at least one camera, of at least one item intended to be handled by the palletizer in a handling process. The method may comprise analyzing, using a machine-learning model, the received image data. The method may comprise determining, using the machine-learning model, that an obstacle may cause a malfunction of the handling process. The method may comprise generating a control signal for instructing the palletizer to stop the handling process.

By implementing the proposed method according to the first aspect of the present invention, the efficiency of handling processes is increased. In particular, hot downtimes are reduced.

A palletizer in the sense of the present invention may include all types of palletizers and depalletizers. The term "palletizer" does not limit the scope of the present invention to the movement of items placed on pallets and is therefore to be understood as a generic term for moving items, in particular if the items are arranged in layers. For example, a layer picker may be a palletizer in the sense of the present invention.

The term receiving image data of an item intended to be handled by the palletizer in a handling process may be understood as receiving images during a handling process, or shortly before or after a handling process. Thus, the image data that may be relevant for carrying out the method according to the present invention may in particular be a time period just before a handling process begins.

The image data may be a video sequence, a video stream, in particular in real-time, and/or a sequence of still images. If more than one camera is used to record the image data, synchronization of the image data of the different cameras is preferably performed. In particular, the four cameras may be arranged in corners of a square around the palletizer to observe the handling process.

Machine learning may refer to algorithms and statistical models that computer systems may use to perform a specific task without using explicit instructions, instead relying on models and inference. For example, in machine-learning, instead of a rule-based transformation of data, a transformation of data may be used that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and/or training sequences (e.g. words or sentences) and associated training content information (e.g. labels or annotations), the machine-learning model "learns" to recognize the content of the images, so the content of images that are not included in the training data can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model. The provided data (e.g., sensor data, meta data and/or image data) may be preprocessed to obtain a feature vector, which is used as input to the machine-learning model.

In some examples, anomaly detection (i.e., outlier detection) may be used, which is aimed at providing an identification of input values that raise suspicions by differing significantly from the majority of input or training data. In other words, the machine-learning model may at least partially be trained using anomaly detection, and/or the machine-learning algorithm may comprise an anomaly detection component.

In some examples, the machine-learning algorithm may use a decision tree as a predictive model. In other words, the machine-learning model may be based on a decision tree. In a decision tree, observations about an item (e.g., a set of input values) may be represented by the branches of the decision tree, and an output value corresponding to the item may be represented by the leaves of the decision tree. Decision trees may support both discrete values and continuous values as output values. If discrete values are used, the decision tree may be denoted a classification tree, if continuous values are used, the decision tree may be denoted a regression tree.

Association rules are a further technique that may be used in machine-learning algorithms. In other words, the machine-learning model may be based on one or more association rules. Association rules are created by identifying relationships between variables in large amounts of data. The machine-learning algorithm may identify and/or utilize one or more relational rules that represent the knowledge that is derived from the data. The rules may e.g. be used to store, manipulate or apply the knowledge.

Machine-learning algorithms are usually based on a machine-learning model. In other words, the term "machine-learning algorithm" may denote a set of instructions that may be used to create, train or use a machine-learning model. The term "machine-learning model" may denote a data structure and/or set of rules that represents the learned knowledge (e.g., based on the training performed by the machine-learning algorithm). In embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of its inputs (e.g., of the sum of its inputs). The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e. to achieve a desired output for a given input.

Alternatively, the machine-learning model may be a support vector machine, a random forest model or a gradient boosting model. Support vector machines (i.e., support vector networks) are supervised learning models with associated learning algorithms that may be used to analyze data (e.g., in classification or regression analysis). Support vector machines may be trained by providing an input with a plurality of training input values that belong to one of two categories. The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection.

The machine-learning model may be provided locally, in particular in a controller of the palletizer, and/or remotely, in particular on a remote server. An advantage of providing the machine-learning model locally is the reduced latency and the possibility to individualize the machine-learning model per palletizer with less effort. An advantage of providing the machine-learning model remotely is that a remote server may have a higher computing power and that training datasets of a plurality of palletizers may be used for training the machine-learning model in order to obtain a higher accuracy of the machine-learning model. Thus, the remote server may be a cloud-based machine-learning environment.

In one preferred embodiment, the machine-learning model is provided locally for controlling the palletizer with reduced latency, and is provided remotely on a remote server where the machine-learning model is further trained using training data obtained from the palletizer. The locally provided machine-learning model is updated regularly. In other words, when the remote machine-learning model is trained, the local machine-learning model is updated such that the local machine-learning model is synchronized with the remote machine-learning model. This way, continuous optimization of the machine-learning model is facilitated.

The machine-learning model may be trained by supervised machine learning according to the fourth aspect of the present invention as described below. The training dataset for training the machine-learning model may be obtained through a method according to the second aspect of the present invention, as described below.

An obstacle in the sense of the present invention may be any type of material, packaging, distortion of items or the like that may interfere with a handling process. An obstacle may in particular be a slip sheet on an item or on items arranged in layers. Such slip sheet may, for example if a layer picker comprising a vacuum gripper is used, interfere the effect of the vacuum. In other words, a slip sheet on top of a plurality of items arranged in a layer to be handled by the palletizer, may weaken the vacuum such that during a handling process, the items may drop. This would be a predicted malfunction of the handling process. An obstacle in the sense of the present invention may also be a packaging overhang that may in particular occur if items are to be handled which are packaged with plastic wrap or the like. Such a packaging overhang of packaging material can be present in particular if the packaging material is laterally torn open. For example, items on a pallet may be wrapped in packaging material and a packaging overhang may be present if the wrapping has not been carried out properly or the wrapping has been cut open at the side or not properly secured.

The control signal causing a stop of the palletizer gives a user the chance to undertake necessary actions with respect to the detected obstacle, for example removing the obstacle. As a result, the safety of the palletizer is significantly increased and major malfunctions during a handling process are prevented. Such malfunctions may cause hot downtimes, i.e. idle times.

Therefore, by implementing the method according to the first aspect of the present invention, hot downtimes may be reduced efficiently in order to save handling process costs and time. Further, the reliability of a palletizer is increased with respect to security aspects.

The method may provide the possibility to process emergency user input causing an abortion of the method and interrupting the handling process and/or passing the control over the handling process, i.e. over the palletizer, to the user such that the user may instruct the palletizer with respect to the handling process.

It may be provided that the control signal instructing the palletizer to stop the handling process causes the palletizer to switch in a temporary stop mode that allows a seamless continuation of the handling process.

The control signal instructing the palletizer to stop the handling process may cause the palletizer to switch in a full stop mode or a temporary stop mode. In case of a full stop, it might be necessary to reset the palletizer before starting further handling processes. Thus, the current handling process is cancelled completely. In case of a temporary stop, the handling process may advantageously be continued without causing more idle times than necessary for removing the obstacle.

It may be provided that the image data comprises a sequence of still images, wherein the step of analyzing comprises selecting a subset of images. Preferably the selected subset of images comprise images recorded at predetermined times before and/or after a start of a handling process.

By selecting a subset of images, the amount of image data to be transferred and processed to the machine-learning model is reduced for the benefit of reduced latency. In particular, by appropriately selecting as many images as necessary to have a sufficient database for a reliable analysis by the machine-learning model, but as few images as possible to reduce processing time, an optimum is found between the accuracy of the analysis by the machine-learning model and the latency.

The images may optionally comprise a unique identifier and/or a time stamp. Unique identifiers and/or time stamps facilitate documentation of a handling process, in particular of a failure in the handling process. A failure in the handling process may for example be a result of a packaging error of items to be handled by the palletizer. For example, a packaging error can be seen in using too much packaging material or multiple layers of packaging material although only one is admissible before handling the items.

Such a packaging error is usually to be accused to the supplier of the items, so that possible hot downtimes or damages can be a possible recourse for the supplier. However, in order to take recourse against the supplier, careful documentation is required, which is made possible with the features mentioned.

It may be provided that the step of determining that an obstacle may cause a malfunction of the handling process comprises detecting a slip sheet on top of the at least one item intended to be handled in a handling process, the slip sheet being the obstacle.

Further, the method may provide that the image data comprises images recorded by at least two cameras, preferably four cameras. The cameras are preferably synchronized with respect to the time at which the image data is recorded.

The benefit of using a plurality of cameras is that a higher accuracy of determining that there is an obstacle that may cause a malfunction of the handling process. In other words, the additional information provided by the use of multiple cameras, in particular the various image data from different angles and viewing directions, allows a precise statement to be made as to whether an interruption of the handling process is required, for example or removing an obstacle, or whether the handling process can be continued.

Synchronization of the cameras ensures that image data recorded at different times are not processed. This avoids errors in the assessment of a situation during a handling process.

It may be provided that the step of determining that an obstacle may cause a malfunction of the handling process comprises:
generating sub-probabilities per camera that an obstacle may cause a malfunction of the handling process; and
determining a combined probability that an obstacle may cause a malfunction of the handling process based on the sub-probabilities.

Determining the combined probability may comprise averaging and/or weighting of the generated sub-probabilities. Different sub-probabilities per camera may e.g. occur if respective camera(s) observe an area where an obstacle is visible, while other camera(s) observe an area where the same obstacle is not entirely visible. For example, in the case if four cameras are provided to observe the handling process, the highest sub-probabilities associated with the respective camera(s) may be given a higher weight than the lower sub-probabilities. Another possible example is that the combined probability is determined based on sub-probabilities excluding the lowest sub-probability. In particular, in the case if four cameras are provided, the second camera may have the lowest generated sub-probability. The determination of the combined probability may then be carried out based on the sub-probabilities associated with the first, third and fourth camera respectively.

Additionally or alternatively, generating the sub-probabilities may comprise weighting of recorded images. In particular, when the image data comprises a sequence of still images, wherein the step of analyzing comprises selecting a subset of images, and wherein the selected subset of images comprises images recorded at predetermined times before and/or after the start of a handling process, it may be provided selected images recorded after the start of the handling process are given a higher weighting than selected images recorded before the start of the handling process. It is preferred that the weighting may increase successively from the first selected image to the last selected image.

Generating sub-probabilities and/or determining the combined probability may be performed using the machine-learning model. The use of sub-probabilities accounts for the fact that different cameras record different parts of a state during a handling process. It increases the precision of detection if each camera is initially treated separately and corresponding sub-probabilities are determined for the actual presence of an obstacle that may cause a malfunction of the handling process.

The sub-probabilities can be weighted as needed for the determination of the combined probability. For example, a camera that indicates a sub-probability of 0 for the presence of an obstacle that may cause a malfunction of the handling process can be omitted from the calculation of the combined probability to increase precision and not degrade the result due to a viewing angle from which the situation is not properly visible. Additionally or alternatively, the recorded images may be weighted for the sake of increasing the precision of the method.

The method may comprise determining that the combined probability that an obstacle may cause a malfunction of the handling process is above a, preferably predetermined, first confidence threshold.

Further to the first confidence threshold, a second confidence threshold may be provided which is higher than the first confidence threshold. In this case, the method may comprise:
if the combined probability is above the first confidence threshold and is above the second confidence threshold, generating a control signal instructing the palletizer to switch in a full stop mode, the full stop mode preferably requiring a reset of the palletizer through a user to be able to perform further handling processes; and/or
if the combined probability is above the first confidence threshold but below the second confidence threshold, generating a control signal instructing the palletizer to switch into a temporary stop mode that allows a seamless continuation of the handling process, preferably upon user input.

Using a threshold is a particularly easy way of deciding whether a calculated combined probability that an obstacle may cause a malfunction of the handling process in fact should result in an interruption or whether the handling process should be continued. The thresholds may be predefined or dynamically managed by the machine-learning model.

Using a first threshold and a second threshold allows to distinguish between different levels of severity of the presence of an obstacle. This facilitates an optimal response of the palletizer in each case. The second confidence threshold may be higher than the first confidence threshold, such that if the combined probability for an obstacle causing a malfunction of a handling process is above the first confidence threshold and above the second confidence threshold, severe errors such as dropping items may occur if the handling process is continued. Therefore, for safety reasons, the palletizer is then switched in the full stop mode.

According to a second aspect of the present invention, a computer-implemented method for generating training data for a machine-learning model for controlling a palletizer is provided. The method may comprise receiving image data, using at least one camera, of at least one item intended to be handled by the palletizer in a handling process. The method may comprise receiving user input from a user including a control signal to the palletizer. The method may comprise generating a training dataset comprising the user input and the image data.

The machine-learning model may be provided locally, in particular in a controller of the palletizer, and/or remotely, in particular on a remote server. For the actual control of the palletizer, a local machine-learning model is beneficial due to the reduced latency. The training of the machine-learning model can then also be performed locally, but during training, an operation may be not possible, and the computing power limited.

Providing the machine-learning model remotely has the benefit that a remote server may have a higher computing power and that training datasets of a plurality of palletizers may be used for training the machine-learning model in order to obtain a higher accuracy of the machine-learning model. Thus, the remote server may be a cloud-based machine-learning environment.

Therefore, it is preferred that the machine-learning model is provided locally for controlling the palletizer with reduced latency, and is provided remotely on a remote server where the machine-learning model is further trained by the method according to the second aspect of the present invention. The locally provided machine-learning model may be updated regularly. In other words, when the remote machine-learning model is trained, the local machine-learning model is updated such that the local machine-learning model is synchronized with the remote machine-learning model. By this, continuous optimization of the machine-learning model is facilitated.

Training data in the sense of the present invention may include obtained image data from at least one camera, as described with respect to the first aspect of the present invention. The image data may also include a unique identifier and/or a time stamp as described above. Further, the training data may include user input, for example indicating that the palletizer should stop and wait until an obstacle is removed. The user input may also comprise a unique identifier and/or a time stamp in order to precisely allocate the user input to the obtained image data. The image data and the user input may comprise further meta data, such as temperature, light conditions and/or identity of the user in charge of the handling process and/or the like.

The user input may indicate that a current situation during a handling process should not lead to an interruption, e. g. by instructing the palletizer to continue the handling process for example in a time period being shorter than a time period threshold. On the other hand, a user input may indicate that an interruption of the handling process was indeed necessary, e.g. by performing a reset of the palletizer or by continuing the handling process after a time period extending a time period threshold.

By receiving the user input, the corresponding image data is classified. This classification can be seen as supervised machine-learning. In one scene of a handling process visible on the image data is classified to stop the handling process, wherein similar scenes will be then also classified respectively by the trained machine-learning model. In other words, the machine-learning model is trained by the decision of a user in respective situations, in particular in reaction to the presence obstacle.

It may be provided that the control signal of the user input comprises at least one of the following: an instruction to stop the handling process; an instruction to wait for a predetermined time before continuing the handling process; an instruction to reset the palletizer; an instruction to switch the palletizer into a manual control mode allowing the user to manually control the palletizer; opening a safety barrier surrounding the palletizer.

For data protection purposes, e.g. in accordance with GDPR or other regulations, it may be provided that only strictly relevant technical information is used. Therefore, it may be provided one or more of the following:
recorded images are cropped before they are stored on any media to only record the material to be handled; image data is only streamed and not recorded; no sound is recorded; all cameras are in a fixed positions and have no zoom functionality; all cameras are physically connected with a cable and not communicating wirelessly; all processing devices such as controllers and the like are physically connected to the network and not wirelessly; all processing of the data that has the potential to contain persons takes place locally and does not leave the premise before the negative validation of the existence of a person has been performed, and the images with persons are deleted.

It may be provided that if the user input comprises manually controlling the palletizer and/or if the user input comprises opening the safety barrier surrounding the palletizer, the respective user input and image data is excluded from the training dataset.

By excluding user input under specific circumstances, it is avoided that the quality of the training data is affected by extraordinary actions by the user. For example, an extraordinary action could be testing the palletizer or demonstrating a specific handling process for training purposes.

According to a third aspect of the present invention, a machine-learning training dataset is provided, the machine-learning training dataset being obtained by a method for generating training data for a machine-learning model according to the second aspect of the present invention.

According to a fourth aspect of the present invention, a computer-implemented method of training a machine-learning model for operating a palletizer is provided. The method may comprise transmitting a training dataset, preferably a plurality of training datasets, in particular according to the third aspect of the present invention, to a cloud-based machine-learning environment, which is preferably part of a remote server. The preferred plurality of training datasets are optionally training datasets associated with a plurality of palletizers. The method may comprise receiving a trained machine-learning model. The machine-learning model is preferably in a binary format.

In other words, it may be provided a locally stored machine-learning model at the palletizer and a remotely stored machine-learning model in the cloud-based machine-learning environment. The training of the machine-learning model may be performed in the cloud-based machine-learning environment. The locally stored machine-learning model is regularly updated such that it is synchronized with the remotely stored machine-learning model. Thus, the locally stored machine-learning model is used for controlling the palletizer, while the remotely stored machine-learning model is used for further training and optimizing of the machine-learning model. Providing the machine-learning model in a binary format is advantageous with respect to the amount of data to be provided.

Machine-learning models may be trained using training input data, as described above. The examples specified above use a training method called "supervised learning". In supervised learning, the machine-learning model is trained using a plurality of training samples, wherein each sample may comprise a plurality of input data values, and a plurality of desired output values, i.e., each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm (e.g., a classification algorithm, a regression algorithm or a similarity learning algorithm). Classification algorithms may be used when the outputs are restricted to a limited set of values (categorical variables), i.e., the input is classified to one of the limited set of values. Regression algorithms may be used when the outputs may have any numerical value (within a range). Similarity learning algorithms may be similar to both classification and regression algorithms but are based on learning from examples using a similarity function that measures how similar or related two objects are. Apart from supervised or semi-supervised learning, unsupervised learning may be used to train the machine-learning model. In unsupervised learning, (only) input data might be supplied and an unsupervised learning algorithm may be used to find structure in the input data (e.g. by grouping or clustering the input data, finding commonalities in the data). Clustering is the assignment of input data comprising a plurality of input values into subsets (clusters) so that input values within the same cluster are similar according to one or more (pre-defined) similarity criteria, while being dissimilar to input values that are included in other clusters. Reinforcement learning is a third group of machine-learning algorithms that may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards).

Furthermore, some techniques may be applied to some of the machine-learning algorithms. For example, feature learning may be used. In other words, the machine-learning model may at least partially be trained using feature learning, and/or the machine-learning algorithm may comprise a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

According to a fifth aspect of the present invention, a data processing apparatus, or a palletizer, is provided. It may comprise means for carrying out a method according to the first, second and/or fourth aspect of the present invention.

The data processing apparatus may comprise means for carrying out a method according to the first aspect of the present invention, and may be a layer picker comprising two, preferably three, preferably four cameras. The cameras may be synchronized with respect to the time at which the image data is recorded. The step of analyzing may comprise selecting a subset of images being recorded at predetermined times before and/or after the start of a handling process.

According to a sixth aspect of the present invention, a computer program is provided, comprising instructions which, when the program is executed by a computer, cause the computer to carry out a method according to the first, second and/or fourth aspect of the present invention.

All technical implementation details and advantages described with respect to any of the first, second, third, fourth, fifth and sixth aspects of the present invention, are self-evidently mutatis mutandis applicable respectively to each of the aspects of the present invention.

Apart from the above-mentioned benefits, embodiments of the invention may further provide at least some of the following additional benefits: More production time because of less stop time; Less need of operator as the machine resets automatically; Less wrong decisions as the operator has live view; investigation tools where video together with data can support what happened; supply visual data with reports to suppliers together with data for downtime; reports on dual slip sheets; system can detect if there is no slip sheet and then continue operation to increase the throughput; detection of slip sheets under a layer which is picked for enabling the removal; detecting a slip sheet on top of pallet and stop or remove it automatically.

Some embodiments of the invention provide a data carrier having electronically readable control signals, which are capable of cooperating with a programmable computer system, such that one of the methods described herein is performed.

Generally, embodiments of the invention can be implemented as a computer program (product) with a program code, the program code being operative for performing one of the methods when the computer program product runs on a computer. The program code may, for example, be stored on a machine-readable carrier. Other embodiments comprise the computer program for performing one of the methods described herein, stored on a machine-readable carrier. In other words, an embodiment of the present invention is, therefore, a computer program having a program code for performing one of the methods described herein, when the computer program runs on a computer.

A further embodiment of the invention provides a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention provides a data stream or a sequence of signals representing the computer program for performing one of the methods described herein. The data stream or the sequence of signals may, for example, be configured to be transferred via a data communication connection, for example, via the internet.

A further embodiment of the invention provides a processing means, for example, a computer or a programmable logic device, configured to, or adapted to, perform one of the methods described herein.

A further embodiment of the invention provides a computer having installed thereon the computer program for performing one of the methods described herein.

A further embodiment of the invention provides an apparatus or a system configured to transfer (e.g., electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### BRIEF DESCRIPTION OF THE DRAWINGS

The disclosure may be better understood by reference to the following drawings:
- Fig. 1:: is a first photo of a layer picker which is a palletizer in accordance with embodiments of the present invention.
- Fig. 2:: is a second photo of a layer picker which is a palletizer, together with a pallet with items and a conveyor, in accordance with embodiments of the present invention.
- Fig. 3:: is a third photo of a layer picker which is a palletizer, together with a hoist crane, in accordance with embodiments of the present invention.
- Fig. 4:: is a first schematic illustration of a palletizer which is about to handle layered items in accordance with embodiments of the present invention.
- Fig. 5:: is a schematic illustration of a handling process of a palletizer, wherein one layer of items is picked, in accordance with embodiments of the present invention.
- Fig. 6:: is a second schematic illustration of a palletizer which is about to handle layered items in accordance with embodiments of the present invention.
- Fig. 7:: is a first photo showing an obstacle in the form of a packaging overhang in accordance with embodiments of the present invention.
- Fig. 8:: is a second photo showing an obstacle in the form of a packaging overhang in accordance with embodiments of the present invention.
- Fig. 9:: is a component diagram corresponding to aspects of the present invention.
- Fig. 10:: is a component diagram according to one exemplary embodiment of the present invention.
- Fig. 11:: is a component diagram showing aspects of one exemplary embodiment of the present invention.
- Fig. 12:: is a schematic overview of a possible handling process in an exemplary embodiment of the present invention.
- Fig. 13:: is a diagram showing the accuracy of different trained machine-learning models according to embodiments of the present invention.

### DESCRIPTION OF PREFERRED EMBODIMENTS

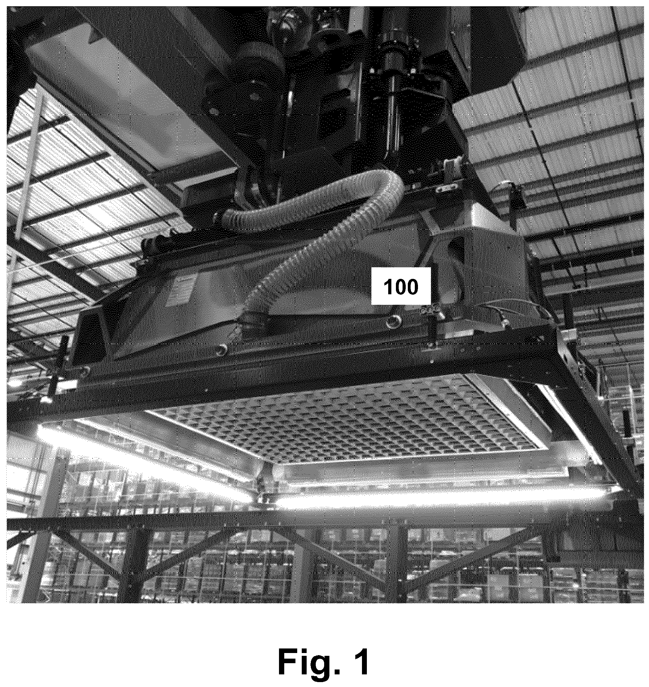

In figure 1, a layer picker being a palletizer 100 according to embodiments of the present invention is shown. The layer picker of figure 1 has a vacuum gripper and may be used to palletize and/or de-palletize items.

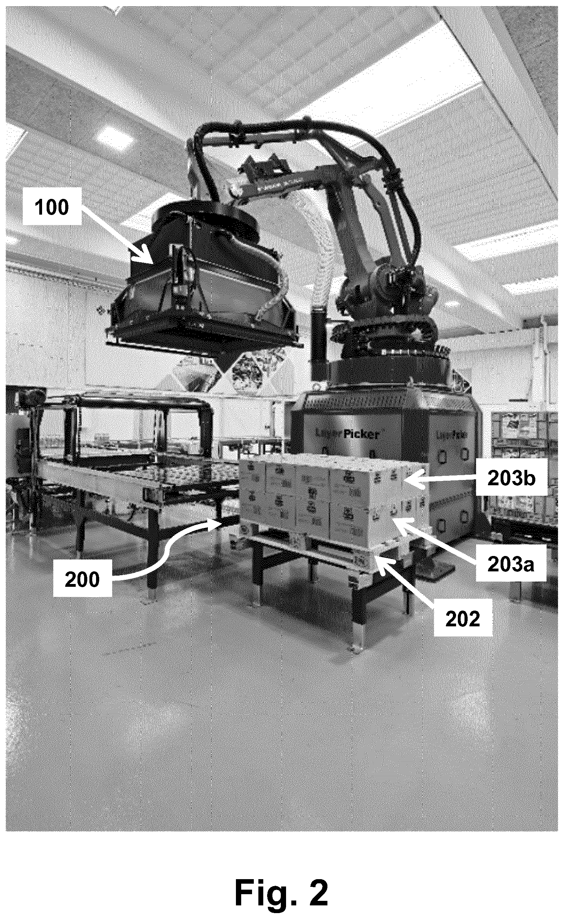

Also, figure 2 shows a layer picker being a palletizer 100 according to embodiments of the present invention. The layer picker is in this case mounted together with a crane. Further, a plurality of layers 203a, 203b of items 200 is illustrated being placed on a pallet 202.

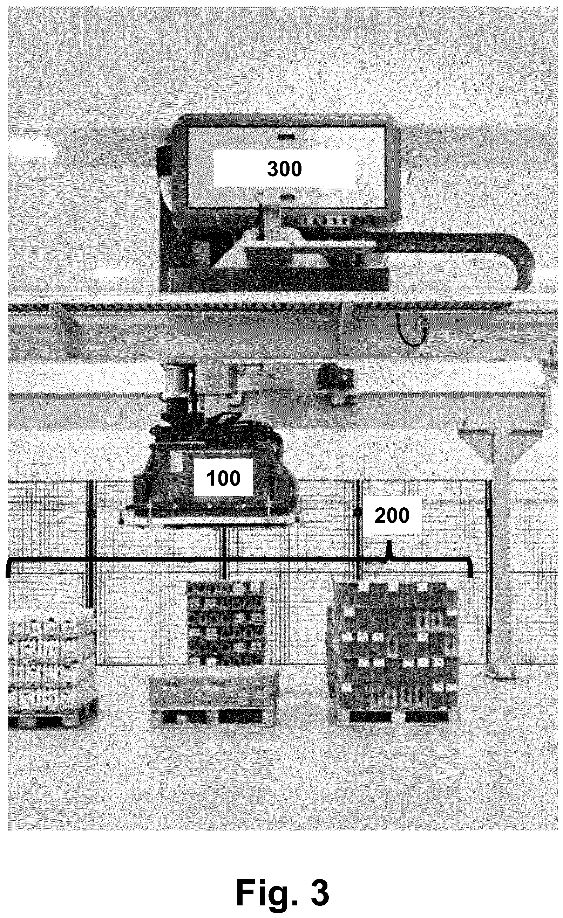

Figure 3 shows a layer picker being a palletizer 100 being configured as a part of a hoist crane 300. Further, items 200 to be handled are illustrated.

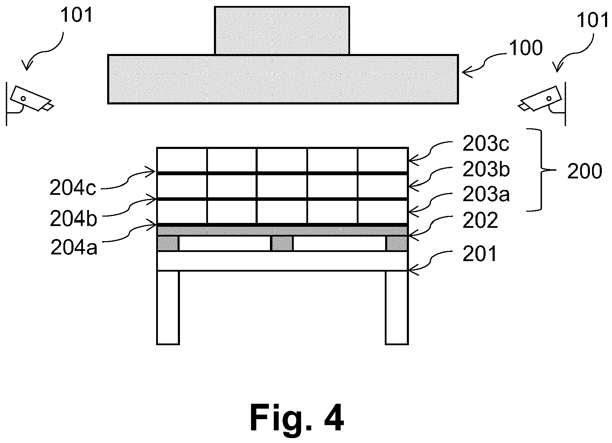

Figure 4 is a highly schematic illustration of a palletizer 100 which is about to start a handling process with respect to layers 203a, 203b, 203c of items 200. Each layer of the items 200 comprises a packaging material 204a, 204b, 204c. In the illustration of figure 4, the packaging materials 204a, 204b, 204c are slip sheets between the layers 203a, 203b, 203c of items 200. The layers 203a, 203b, 203c of items 200 are placed on a pallet 202 and the pallet 202 is placed on a schematically illustrated conveyor 201. The material handling process, i.e. the handling of a layer 203a, 203b, 203c of items 200 may be observed by cameras 101.

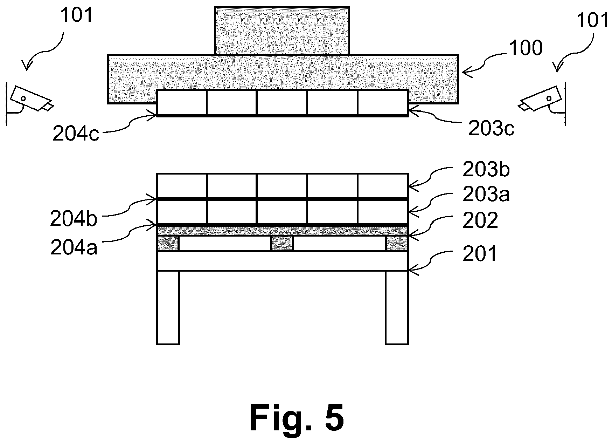

Figure 5 shows in principle the same as figure 4, wherein the palletizer 100 is just in a handling process of handling one layer 203c of items 200. As can be seen from figure 5, there is no error in the handling process.

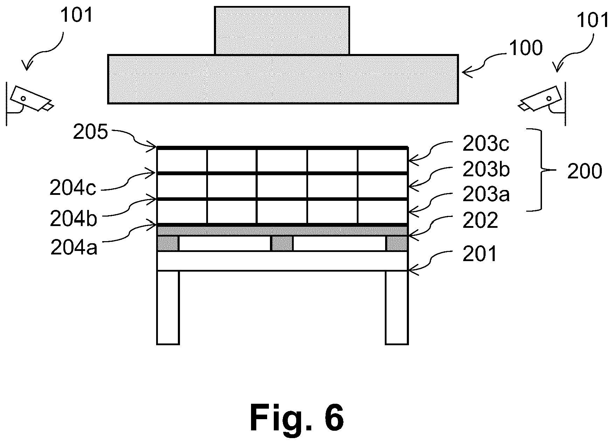

In figure 6, there is an obstacle 205 on top of the layer 203c. The obstacle 205 may for example be a packaging material of a previous layer which was handled before. Or the obstacle is an accidentally provided too much packaging material. In other words, the supplier of the goods in this case may have placed two slip sheets between the layers instead of just one slip sheet.

If the palletizer, in the scenario of figure 6, would pick the layer 203c, there is a high possibility of a major malfunction during the handling process, for example a drop of items. The method of the present invention may detect the obstacle through analyzing the image data received from the cameras 101 and generate a control signal instructing the palletizer 100 to stop. A user may, after the palletizer 100 stopped, remove the obstacle 205 and then continue the handling process. This saved hot downtimes since if a major malfunction during the handling process occurs, such as a drop of items, high hot downtimes are caused.

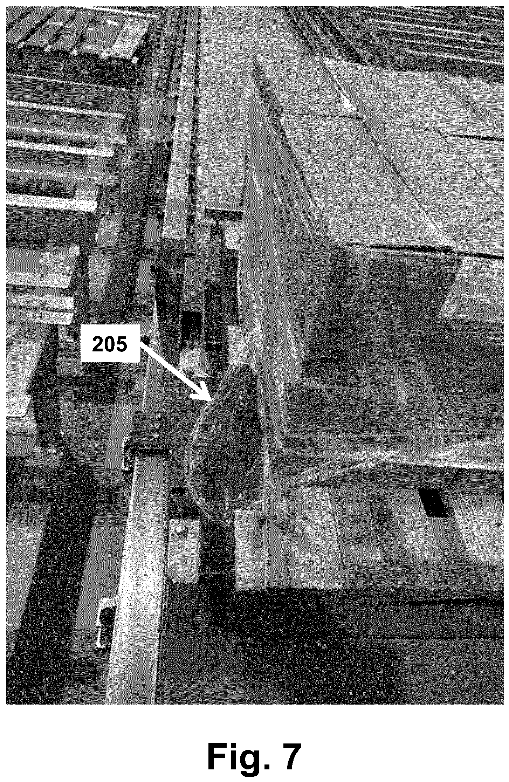

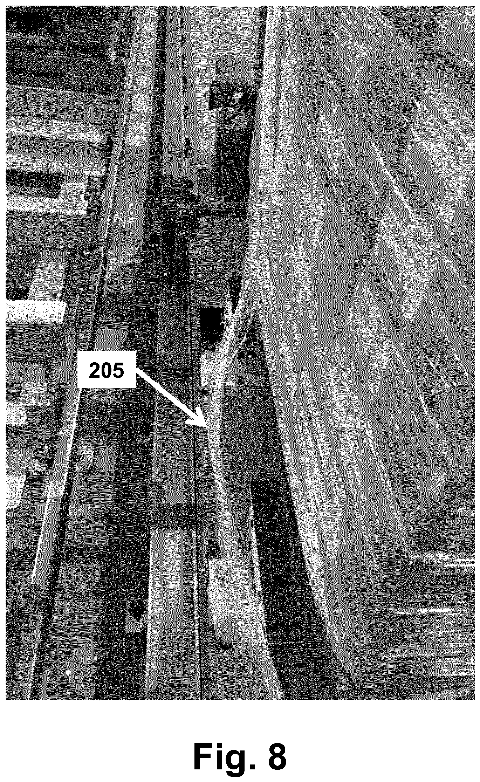

As described above, an obstacle in the sense of the present invention may also be a packaging overhang that may in particular occur if items are to be handled which are packaged with plastic wrap or the like. Such a packaging overhang of packaging material is illustrated in figures 7 and 8.

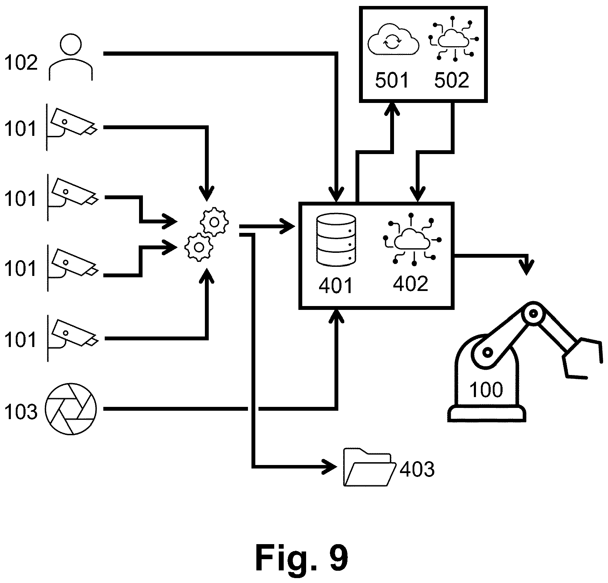

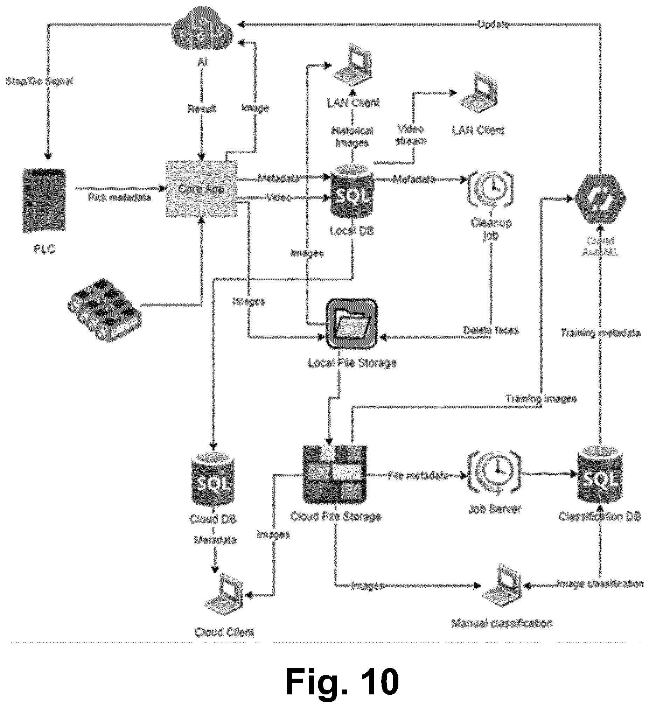

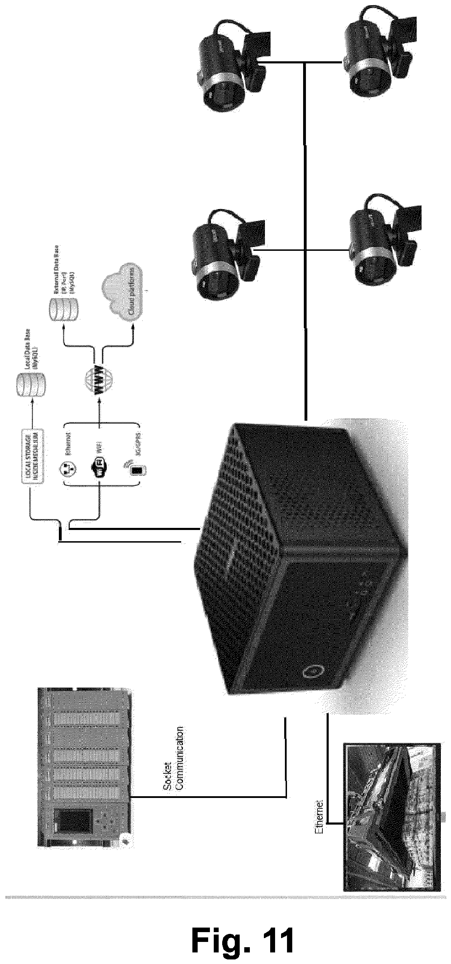

Figure 9 shows a component diagram according to one exemplary embodiment of the present invention. Figure 10 shows a further component diagram showing aspects of one exemplary embodiment of the present invention. Figure 11 shows a further component diagram showing the hardware, in particular the four cameras and the PC according to one exemplary embodiment of the present invention.

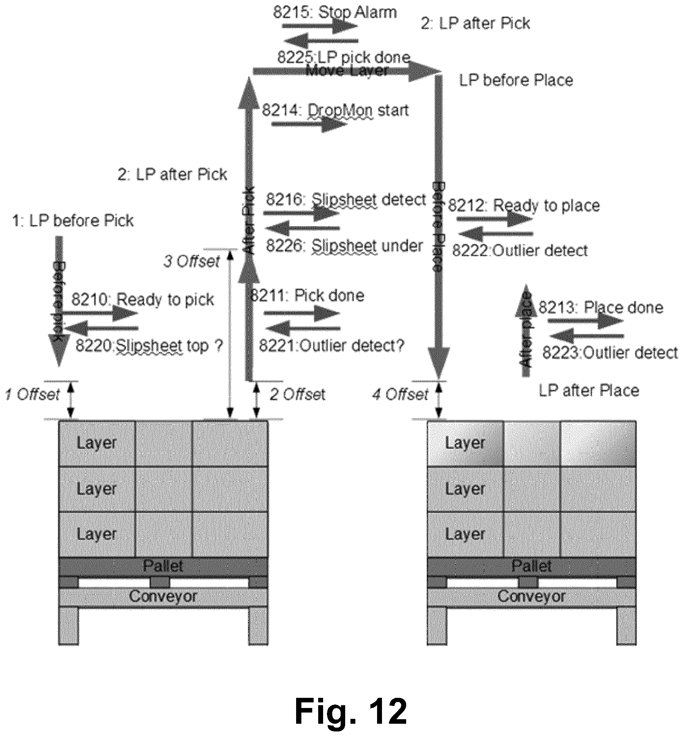

Figure 12 provides a schematic overview of a possible handling process in an exemplary embodiment of the present invention. The following table provides further aspects, in particular telegram codes and their meaning during the exemplary handling process shown in figure 12:

| | Telegram no. | Flow Chart | Explanation & Destination: |
|---|---|---|---|
| 1 0200 - 10300 | 8210 | | Pi C -> AI-BOX: LP ready to pick |
| | 8220 | | AI-BOX -> Slipsheet detection at pick (Slipshet on top) |
| | 8211 | | PLC -> AI-BOX: LP pick done - check outline |
| | 8221 | | AI-BOX -> Outline detection after pick |
| | 8216 | | PLC -> AI-BOX: LP ready to pick |
| | 8226 | | AI-BOX -> Slipsheet detection at pick (Slipshet under) |
| | 8212 | | PLC -> AI-BOX: LP ready to place - check outline |
| | 8222 | | AI-BOX -> PLC Outliner detection, destination-position |
| | 8213 | | PLC -> AI-BOX: LP place done |
| | 8223 | | AI-BOX -> PLC Outliner detection, destination-position |
| | 8214 | | PLC -> AI-BOX: LP start drop monitor |
| | 8224 | | AI-BOX -> PLC: Reply drop monitor |
| | 8215 | | PLC -> AI-BOX: LP stop Alarm drop monitor |
| | 8225 | | AI-BOX -> PLC LP Drop monitoring status |
| | 8235 | | PLC -> AI-BOX: LP operator selection |
| | 8245 | | AI-BOX -> PLC: ACK 8235 |

In the following, exemplary implementations of the present invention are described on a more detailed level.

A first exemplary implementation may be related to the training phase of the machine-learning model for detecting a slip sheet on top of a layer:
1. The PLC sends a Signal 8210 signal before pick
2. A manual check is performed until having 40 pictures of slip sheets
3. A "not strong model" is created, wherein being sufficient to sort away most of the non-slip sheet cases so less images of slip sheets have to be checked

A second exemplary implementation may be related to the training phase of the machine-learning model for automatically detecting a slip sheet on top of a layer:
1. The PLC sends a Signal 8210 before pick
2. The Operator Eye sends back a signal (TRUE or FALSE) based on a threshold on the application, for example this may be set to 91 %
3. If the PLC receives a TRUE signal
   a. The machine will stop.
   b. In the future, will the machine adapt and move the slip sheet automatically by adapting programs.

In the following, experimental results are provided, wherein a layer picker is operated with the method according to the present invention. The method is implemented such as a combined probability for the cameras will stop the layer picker and by that not cause a drop of product causing a major stop and product damage. Further, a confidence threshold is defined in the test period. The trained machine-learning model for the experiments is derived from a layer picker installed in early October 2021. In total, 68 GB and 2.1 million files are collected until January 2022, wherein 122.000 images and 56.000 image sequences were classified.

The system was deployed in shadow mode with 40 pictures training (Gen0). Until 1 December 2021, 63.316 images were manually reviewed (first-generation machine-learning model, Gen1). In 527 images it was determined that there is an obstacle in the form of a slip-sheets. This equals to 0,83 % of all images.

The trained second-generation machine-learning model was deployed to a site for testing (Gen2). Until 5 January 2022, 122.000 images were reviewed. 0,91 % contained obstacles in the form of a slip sheet.

Based on the second-generation machine-learning model, a new third-generation machine-learning model was trained (Gen3). For that, the performance was benchmarked by a statical analysis and there was found some outliers to be avoided. The trained third-generation machine learning model, according to the results of the analysis, has an accuracy of > 0.95 (1 = absolute certainty).

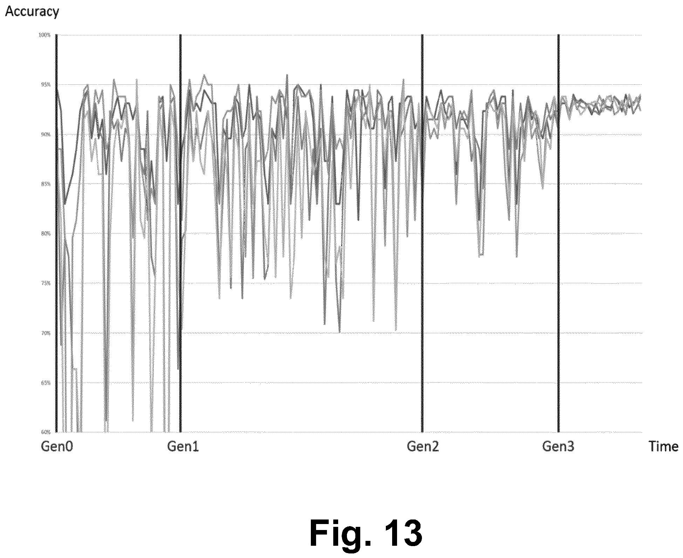

As it can be seen in figure 13, which is a diagram showing the accuracy of different trained machine-learning models (Gen0, Gen1, Gen2, Gen3), the accuracy increases, the accuracy of the third-generation machine-learning model being approximately 95 %. Based on that, it may be concluded that added training data increases the accuracy of the machine-learning model.

In an experimental implementation of the third-generation machine-learning model, 36 obstacles in the form of slip sheets on top of pallets were detected during 20 days. This can potentially have saved a customer 36 x 10 min of hot downtimes, in case the handling process would have failed with the respective items.

An exemplary hardware setup usable in embodiments of the invention may include:
Fanless Embedded Box-PC:
   - Slim Embedded System
   - Intel^{®} Core^{™} i5-5350U Processor (Broadwell-U)
   - 6 GbE LAN with 4 PoE+, 4 COM, 6 USB, Isolated DIO
   - 257 × 141 × 48 mm
   - 6-36 VDC
   - PC connected to Cable, and trough proper Firewall routing
   - without PS
Camera(s):
   - DALSA GENIE NANO-C2020 POE
   - Wide angle lens S-Mount lens for sensor max. 1/1.8" - max. 5 Megapixel
   - Focal length 2.95 mm

In the following, implementation details are disclosed with respect to exemplary embodiments of the present invention.

A job server may be used to host all scheduled jobs in a cloud. For example, it may only execute one job every 10 minutes that will run through all files that were generated in the file storage for the current day and insert the paths of these files into the classification database. This ensures "galvanic protection" as there is no additional information attached to the images, only their content and file names.

A classification database may be used to hold classifications performed by the manual classification operators. It may also track which operator has performed how many classifications, the individual classification verdict as well as calculations on the financial compensation for the operators. The database may also be able to generate a CSV file with the verdict, that AutoML can read into a dataset.

Google's AutoML "Single label classification" may be used as a cloud path for the images generated in the CSV files. They may be imported into a dataset.

When the CoreApp inserts for example a 8215 record in the database, an Al Sequence Inference may be called. It may grab the metadata from the database and the image files for that sequence from the file system. In then takes the images from the 4 cameras, for 4 frames (18,20,22,24), in total 16 images, and invokes a Rest API call to On-Prem Al. This returns the verdict for the 16 images. The Al Sequence inference then takes the average over the 4 frames for each camera and updates the database with the average verdicts. It then calculates the total average and compares that to the threshold defined in the configuration file for the program. If the score is bigger than the configured threshold, it will send a message telegram over TCP to the PLC, port 10100 (Also configured in the config file). The telegram contains CONT for continue og STOP for stop. The PLC replies back with the same record to verify the receipt of the telegram. The events of accessing the file system, the verdict, and the PLC communication are logged, as well as any errors.

There may be one script for sequences (8215) and one for images (8210). Both of them look in the database for picks whose images have not yet been uploaded to cloud. It generates a list of these images, finds each image in the file system, and checks for faces in the images. If faces are found, the images are physically replaced with a black image with the text "FACE DETECTED - IMAGE IS VOID". After, and ONLY after, the face detection has run, the images will be uploaded to the cloud file storage and the database is updated with the information that the file has been uploaded. For 8215, an .avi video file is made and uploaded. It is made only after face detection is completed.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some or all of the method steps may be executed by (or using) a hardware apparatus, such as a processor, a microprocessor, a programmable computer or an electronic circuit. Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

### REFERENCE SIGNS

- 100: palletizer
- 101: camera
- 102: user
- 103: light sensor
- 200: items
- 201: conveyor
- 202: pallet
- 203a - 203c: layers
- 204a - 204c: packaging material
- 205: obstacle
- 300: hoist crane
- 401: local server
- 402: machine-learning model on local server
- 403: local file storage
- 501: remote server
- 502: machine-learning model on remote server

## Claims

1. A computer-implemented method of operating a palletizer (100), comprising:
receiving image data, using at least one camera (101), of at least one item intended to be handled by the palletizer (100) in a handling process;
analyzing, using a machine-learning model (402, 502), the received image data;
determining, using the machine-learning model (402, 502), that an obstacle may cause a malfunction of the handling process; and
generating a control signal for instructing the palletizer (100) to stop the handling process.

2. The method of claim 1, wherein the control signal for instructing the palletizer (100) to stop the handling process causes the palletizer (100) to switch in a temporary stop mode that allows a seamless continuation of the handling process.

3. The method of claim 1, wherein the image data comprises a sequence of still images, wherein the step of analyzing comprises selecting a subset of images, and wherein preferably the selected subset of images comprises images recorded at predetermined times before and/or after a start of a handling process, and wherein preferably the images comprise a unique identifier and/or a time stamp.

4. The method of one of claims 1 to 3, wherein the step of determining that an obstacle may cause a malfunction of the handling process comprises detecting a slip sheet (204a, 204b, 204c) on top of the at least one item intended to be handled in a handling process, the slip sheet being the obstacle.

5. The method of one of claims 1 to 4, wherein the image data comprises images recorded by at least two cameras (101), preferably four cameras (101), wherein the cameras (101) are preferably synchronized with respect to the time at which the image data is recorded.

6. The method of claim 5, wherein the step of determining that an obstacle may cause a malfunction of the handling process comprises:
generating sub-probabilities per camera (101) that an obstacle may cause a malfunction of the handling process; and
determining a combined probability that an obstacle may cause a malfunction of the handling process based on the sub-probabilities.

7. The method of claim 6, wherein determining a combined probability comprises averaging and/or weighting of the generated sub-probabilities.

8. A computer-implemented method for generating training data for a machine-learning model (402, 502) for controlling a palletizer (100), comprising:
receiving image data, using at least one camera, of at least one item intended to be handled by the palletizer in a handling process;
receiving user input from a user (102) including a control signal to the palletizer; and
generating a training dataset comprising the user input and the image data.

9. The method of claim 8, wherein the control signal of the user input comprises at least one of the following: an instruction to stop the handling process; an instruction to wait for a predetermined time before continuing the handling process; an instruction to reset the palletizer (100); an instruction to switch the palletizer (100) into a manual control mode allowing the user to manually control the palletizer (100); opening a safety barrier surrounding the palletizer (100).

10. The method of claim 8 or 9, wherein, if the user input comprises manually controlling the palletizer (100) and/or if the user input comprises opening the safety barrier surrounding the palletizer (100), the respective user input and image data is excluded from the training dataset.

11. A machine-learning training dataset obtained by a method for generating training data for a machine-learning model (402, 502) according to one of claims 8 to 10.

12. A computer-implemented method of training a machine-learning model (402, 502) for operating a palletizer (100), comprising:
transmitting a training dataset, preferably a plurality of training datasets, preferably according to claim 11, to a cloud-based machine-learning environment, wherein the preferred plurality of training datasets are optionally training datasets associated with a plurality of palletizers (100);
receiving a trained machine-learning model (402, 502), wherein the machine-learning model (402, 502) is preferably in a binary format.

13. A data processing apparatus or a palletizer (100), comprising means for carrying out the method of any one of claims 1 to 10 and/or 12.

14. The palletizer of claim 13 comprising means for carrying out the method of any one of claims 1 to 8, and being a layer picker apparatus comprising four cameras (101), wherein the cameras (101) are synchronized with respect to the time at which the image data is recorded, and wherein the step of analyzing comprises selecting a subset of images being recorded at predetermined times before and/or after a start of a handling process.

15. A computer program comprising instructions which, when the program is executed by a computer, cause the computer to carry out the method of any one of claims 1 to 10 and/or 12.
